Europäisches Patentamt

(19) European Patent Office

Office européen des brevets

(11) Veröffentlichungsnummer: **0 093 407**

**A1**

(12) # EUROPÄISCHE PATENTANMELDUNG

(21) Anmeldenummer: 83104150.4

(51) Int. Cl.³: **B 62 D 33/06**

(22) Anmeldetag: 28.04.83

(30) Priorität: 04.05.82 DE 3216617

(43) Veröffentlichungstag der Anmeldung:
09.11.83 Patentblatt 83/45

(84) Benannte Vertragsstaaten:
AT DE FR GB NL SE

(71) Anmelder: Iveco Magirus Aktiengesellschaft
Schillerstrasse 2
D-7900 Ulm/Donau(DE)

(72) Erfinder: Schumann, Rolf, Dipl.-Ing.
Weihungszeller Strasse 7
D-7901 Illerrieden 2(DE)

(72) Erfinder: Weichand, Heinrich
Wikingerstrasse 10
D-7910 Neu-Ulm 4(DE)

(74) Vertreter: Socha, Peter
Iveco - Magirus Aktiengesellschaft Postfach 2740
Schillerstrasse 2
D-7900 Ulm(DE)

(54) Sicherheitseinrichtung für eine an einem kippbaren Fahrerhaus angeordnete Kippstütze.

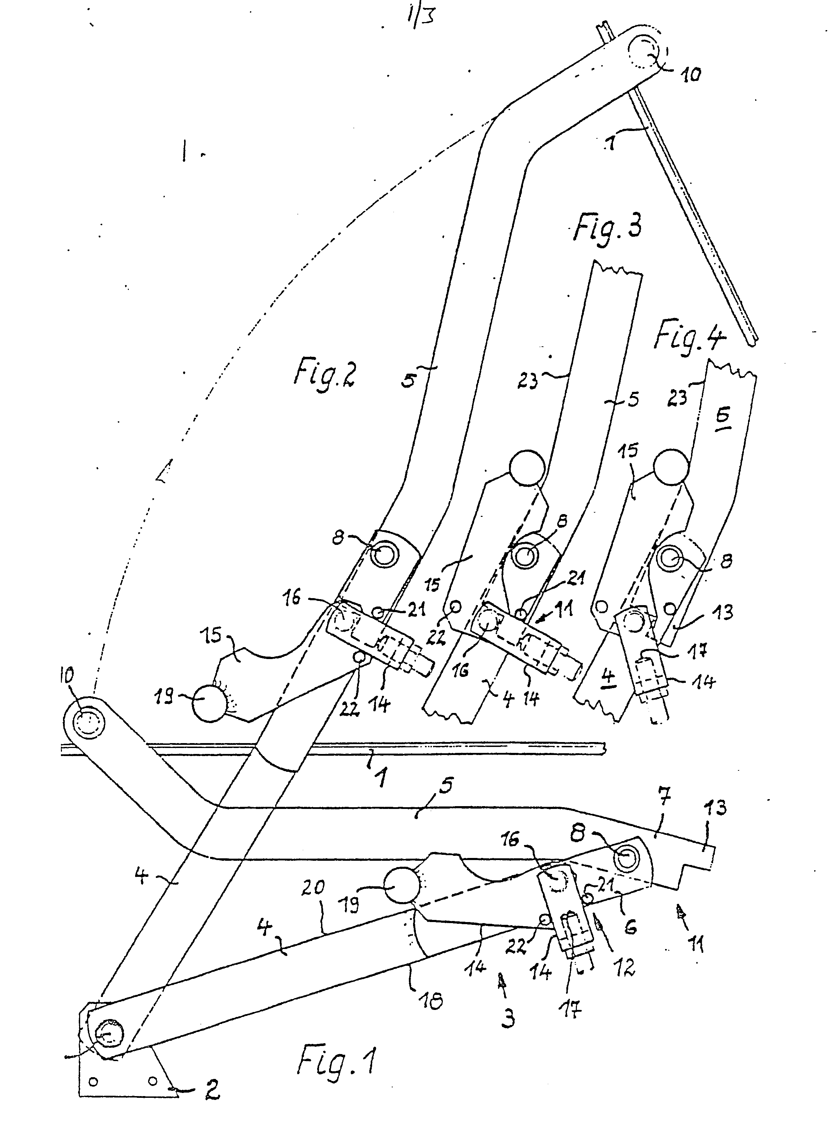

(57) Sicherungseinrichtung für eine Kippstütze (3) an einem kippbaren Fahrerhaus (1) eines Nutzfahrzeuges, die aus zwei Laschen (4, 5) besteht, die untereinander über ein Knickgelenk (11) verbunden sind und die mit ihren freien Enden einerseits am Fahrerhaus (1) und andererseits am Fahrzeugrahmen (2) angelenkt sind und bei der das Knickgelenk (11) in Kippstellung des Fahrerhauses (1) mittels einer Sperre (12) blockierbar ist, wobei die Sperre (12) aus einem in der Nähe des Knickgelenkes (11) an der fahrgestellseitigen Lasche (4) schwenkbar angeordneten Sicherungsriegel (14) und einer mit diesem zusammenwirkenden Riegelfalle (15) besteht, die beim Aufkippen des Fahrerhauses (1) infolge der Relativbewegungen der Laschen (4, 5) aus einer Löse- in eine Sicherungsstellung verstellbar ist und die dabei gleichzeitig den Sicherungsriegel (14) aus einer Entriegelungs- in eine Verriegelungsstellung umschwenkt und daß durch Umlegen der Riegelfalle (15) in eine vom Sicherungsriegel (14) losgelöste Lage diese aus einem gesicherten in einen entsicherten Zustand übergeführtwird, aus dem der Sicherungsriegel (14) durch geringfügiges weiteres Aufkippen des Fahrerhauses (1) selbsttätig in die Entriegelungsstellung schwenkt (Fig. 1 bis 4).

./...

Sicherheitseinrichtung für eine an einem
kippbaren Fahrerhaus angeordnete Kippstütze

Die Erfindung bezieht sich auf eine Sicherheitseinrichtung,
der im Oberbegriff des Anspruches 1 genannten Art.

Eine Sicherheitseinrichtung der genannten Art ist aus der DE-OS
28 27 133 bekannt. Sie besteht aus einem an der fahrerhausseitigen Lasche befestigten Federbügel, der bei aufgekipptem Fahrerhaus ein über das Knickgelenk nach oben verlängertes Ende der unteren Lasche beidseitig umklammert. Das Lösen des Federbügels erfolgt manuell durch eine Bedienungsperson, die hierzu unter das
aufgekippte Fahrerhaus treten und den Federbügel seitlich aus
der Schwenkrichtung der unteren Lasche wegdrücken muß. Der Federbügel muß in dieser Lösestellung solange festgehalten werden, bis
nach einem ersten Abkippen des Fahrerhauses das obere Ende der
Lasche außerhalb des Federbügels geschwenkt ist.

Von Nachteil ist, daß zum Lösen der Sicherheitseinrichtung die
Bedienungsperson unmittelbar unter das aufgekippte Fahrerhaus
oder zumindest so nahe an dieses herantreten muß, daß bei einer
defekten Kippeinrichtung die Bedienungsperson nach Lösen der
Sicherheitseinrichtung von dem sich nunmehr abkippenden Fahrerhaus erfaßt und dabei verletzt werden kann. Weiterhin ist es nachteilig, daß sich beim Einrasten des oberen Endes der Lasche in die
Raste des Federbügels beide Teile reibend aneinander vorbei bewegen und so dem Verschleiß unterliegen, der nach einiger Zeit die
Funktion der Teile beeinträchtigt.

Ausgehend von dem bekannten Stand der Technik liegt der Erfindung
daher die Aufgabe zugrunde, die Sicherheitseinrichtung der eingangs genannten Gattung so zu verbessern, daß selbst bei einer defekten Kippvorrichtung und nach Lösen der Sicherheitseinrichtung ein ungewolltes Abkippen des Fahrerhauses verhindert
wird und außerdem die Sicherheitseinrichtung mit einfach und
im wesentlichen verschleißlos gestalteten Mitteln zuverlässig
bewerkstelligt wird.

Die Aufgabe wird nach der Erfindung durch die im kennzeichnenden Teil des Anspruches 1 enthaltenen Merkmale gelöst.

Die erfindungsgemäße Sicherheitseinrichtung hat den Vorteil,
daß die Wirkung der Kippstütze auch nach dem Entsichern des
Sicherungsriegels weiter erhalten bleibt, so daß das Fahrerhaus
aus dieser Stellung heraus selbst bei einer defekten Kippvorrichtung nicht in seine Betriebslage zurückschwenken kann.
Bei der erfindungsgemäßen Lösung bleibt also der Sicherungsriegel bzw. die Sicherheitseinrichtung auch dann noch in ihrer Funktion voll erhalten, wenn der Sicherungsriegel selbst sich in einer entsicherten Lage befindet.

Gemäß den Merkmalen des Anspruches 2 wird eine im Aufbau sehr
einfache und damit kostengünstige und im wesentlichen verschleißlose Sicherheitseinrichtung erreicht.

Eine weitere bevorzugte Ausführungsform der Erfindung ist durch
die Merkmale des Anspruches 3 gekennzeichnet.

Durch die Merkmale des Anspruches 4 ergibt sich der Vorteil,
daß die Riegelfalle selbsttägig aus der entsicherten immer selbsttätig in die für den Sicherungsriegel gesicherte Stellung geschwenkt wird.

Weitere vorteilhafte Ausgestaltungen der Erfindung sind den Merkmalen der Ansprüche 5 und 6 zu entnehmen.

Gemäß Anspruch 7 befindet sich die Sperre in vorteilhafter Weise
im Bereich des Knickgelenkes.

Die Ansprüche 8 bis 11 enthalten weitere vorteilhafte Ausgestaltungen der im Bereich des Knickgelenkes angeordneten Sperrvorrichtung.

In der Zeichnung sind zwei Ausführungsbeispiele der Erfindung
dargestellt.

Es zeigen:

Fig. 1       in einer schematischen Seitenansicht die Anordnung einer Kippstütze mit der erfindungsgemäßen
            Sperre in der Betriebsstellung des Fahrerhauses;

Fig. 2.      die Kippstütze aus Fig. 1 bei aufgeklapptem Fahrerhaus sowie die Sperre in gesicherter Stellung;

Fig. 3       die Kippstütze aus Fig. 2 mit der Sperre in entsichertem Zustand;

Fig. 4       in einer Seitenansicht das Knickgelenk mit der
            Sperre in entsicherter Stellung;

Fig. 5       in einer Seitenansicht die An-ordnung der Sperre
            am fahrgestellseitigen Gelenkpunkt der Kippstütze
            und deren Lage in Betriebsstellung des Fahrerhauses;

Fig. 6       bei aufgeklapptem Fahrerhaus die Lage der Sperre
            in einer gesicherten und entsicherten Position.

In der Zeichnung sind nur diejenigen Teile eines Fahrzeuges bzw.
eines Fahrerhauses enthalten, die zur Erläuterung der Erfindung
unbedingt notwendig sind. So ist in den Figuren von einem kippbaren Fahrerhaus lediglich dessen Fahrerhausboden 1 teilweise
und vom Fahrzeugrahmen ein Lagerschild 2 für die rahmenseitige
Befestigung der Kippstütze dargestellt. Das kippbar auf dem

---

Fahrgestellrahmen gelagerte Fahrerhaus hat um ein unbeabsichtigtes Zurückkippen des aufgeklappten Fahrerhauses zu vermeiden, eine Kippstütze 3. Die Kippstütze 3 besteht aus zwei Laschen 4 und 5, die mit ihren Enden 6 und 7 untereinander über
einen Gelenkbolzen 8 verbunden sind und von der die Lasche 4
mit ihrem anderen Ende üb-er einen Gelenkbolzen 9 am Lagerschild
2 und die Lasche 5 mit ihrem anderen Ende über einen Gelenkbolzen 10 am Fahrerhausboden 1 um eine Fahrzeugquerachse schwenkbar befestigt sind. Die freien Enden 6 und 7 bilden dabei zusammen mit dem Gelenkbolzen 8 das Knickgelenk 11. Mittels einer
noch näher zu beschreibenden Sperre 12 kann das Knickgelenk 11
bei aufgeklapptem Fahrerhaus so blockiert werden, daß eine starre Verbindung zwischen den Laschen 4 und 5 entsteht, die somit
ein unbeabsichtigtes Zurückschwenken des Fahrerhauses verhindert.
Am Ende 7 der Lasche 5 ist eine Nase 13 vorgesehen, die sich bei
aufgeklapptem Fahrerhaus an einen Anschlag an der Lasche 4 anlegen
kann, wobei die Nase 13 und der Anschlag so an den Laschen 4 und 5
festgelegt sind, daß in Strecklage der Kippstütze der Gelenkbolzen
8 außerhalb einer durch die Gelenkbolzen 9 und 10 gelegten Wirkungslinie liegt.

Die Sperre 12, mit der das Knickgelenk 11 blockiert werden kann,
hat einen Sicherungsriegel 14 und eine mit diesem zusammenwirkende
Riegelfalle 15, die unterhalb des Knickgelenkes 11 auf einem gemeinsamen Gelenkbolzen 16 an der Lasche 4 schwenkbar gelagert
sind.

Der Sicherungsriegel 14 ist U-förmig ausgebildet und besitzt
einen Anschlag 17, der vor der in Knickrichtung nach vorne weisenden Stirnseite 18 der Lasche 4 liegt. Die Riegelfalle 15 besitzt an ihrem freien äußeren Ende ein Ballastgewicht 19 und hat
eine gegenüber dem Sicherungsriegel 14 zur rückwärtigen Seite 20
der Lasche 4 hin versetzte Lage. In der Verriegelungsstellung
nimmt das Riegelglied 14 eine gegenüber der Lasche 4 etwa rechtwinklige Position ein, die nach oben durch einen Anschlagbolzen 21

0093407

und nach unten durch einen an der Riegelfalle 15 vorgesehenen Mitnehmerbolzen 22 fixiert ist.

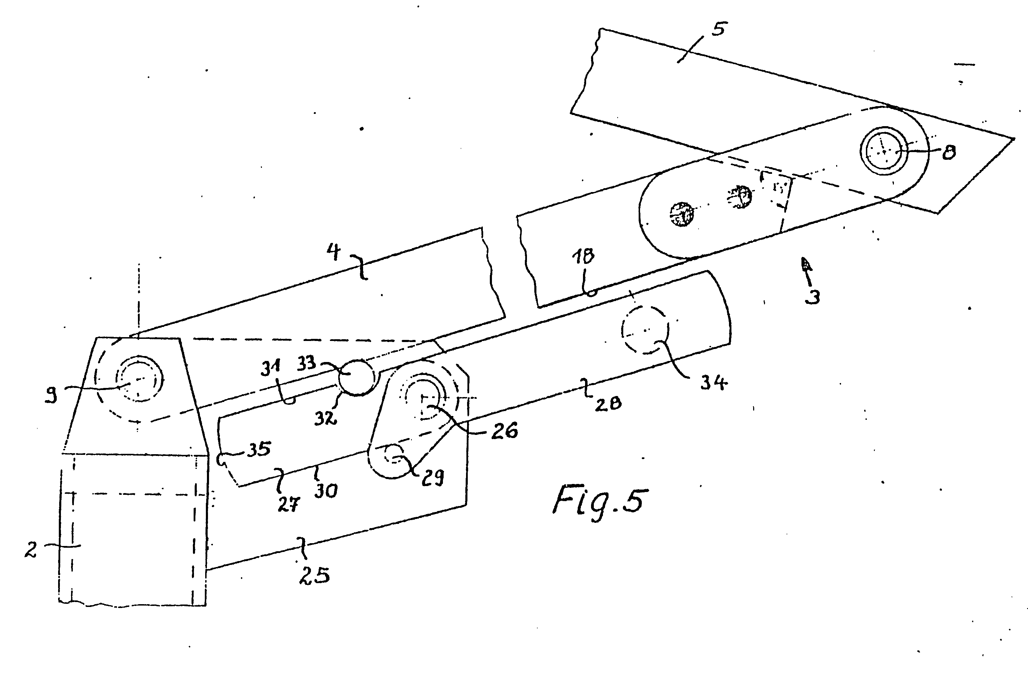

Beim Aufkippen des Fahrerhauses wird der Sicherungsriegel 14 durch die Riegelfalle 15 in dieser gesicherten Lage gehalten. Kurz vor Erreichen der Strecklage bei vollständig aufgeklapptem Fahrerhaus stößt die Nase 13 gegen den Anschlag 17 und schwenkt dabei die Sperre insgesamt im Uhrzeigersinn soweit, daß die Anschlagnase 13 an dem Anschlag 17 vorbeigleiten kann und an dem durch den Gelenkbolzen 16 gebildeten Anschlag der Lasche 4 zur Anlage kommt. In dieser Stellung der Kippstütze 3 wird dann der Sicherungsriegel 14 über die Riegelfalle 15 in die aus Fig. 2 gezeigte Stellung zurückgeschwenkt. Die Sperre 12 befindet sich sodann in ihrer gesicherten Lage, in der das Knickgelenk 11 in beiden Schwenkrichtungen blockiert ist. Die Außenseite der Anschlagnase 13 liegt dabei am Anschlag 17 des Sicherungsriegels 14 an. Durch Umlegen der Riegelfalle 15 in die aus Fig. 3 ersichtliche Lage wird der Sicherungsriegel 14 aus seiner gesicherten in die entsicherte Stellung übergeführt. Die Riegelfalle 15 liegt dann mit ihrem Ballastgewicht an der der Knickrichtung abweisenden Seite 23 der Lasche 5 an. Durch geringfügiges weiteres Anheben des Fahrerhauses wird die Anlage zwischen der Anschlagnase 13 und dem Anschlag 17 gelöst und der Sicherungsriegel 14 fällt nach unten in die entriegelte Stellung (Fig. 4). Danach kann das Fahrerhaus aus seiner aufgekippten Lage in die Betriebslage zurückgeschwenkt werden. Während des Zurückschwenkens wird die Riegelfalle 15 von der Lasche 5 entgegen dem Uhrzeigersinn bewegt, die bei einem bestimmten Knickwinkel durch das Ballastgewicht 19 in die aus Fig. 1 ersichtliche gesicherte Lage umschwenkt und dabei gleichzeitig den Sicherungsriegel 14 in eine Sperrbereitschaftsstellung mit verschwenkt.

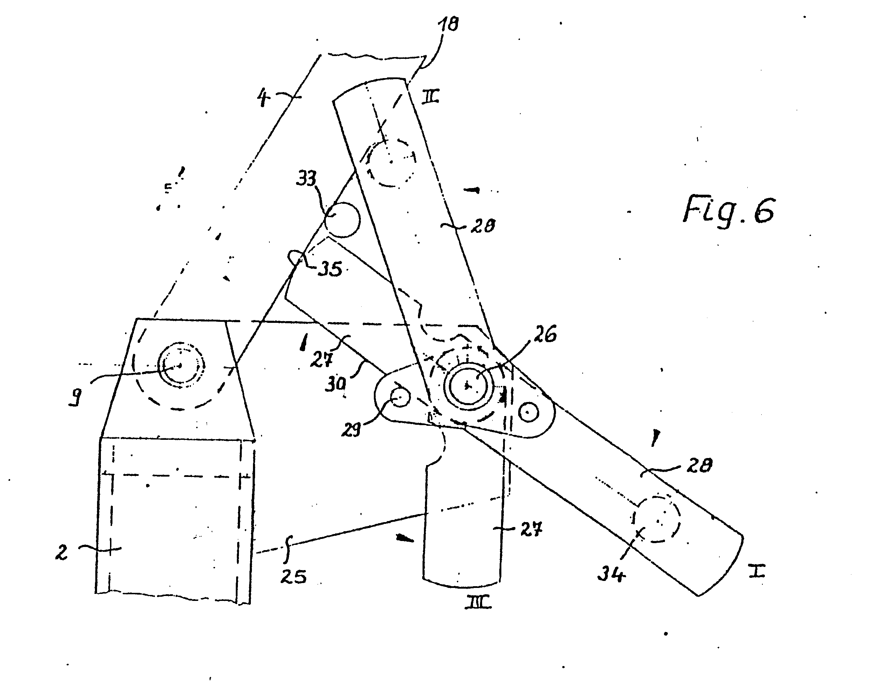

Die Fig. 5 und 6 zeigen die Anordnung einer Sperre 24 zwischen der unteren Lasche 4 und dem rahmenseitigen Gelenkbolzen 9.

Am Lagerschild 2 ist eine Konsole 25 angebracht, an der auf einem Bolzen 26 die aus dem Sicherungsriegel 27 und der Riegelfalle 28 bestehende Sperre 24 schwenkbar gelagert ist.
Die Wirkungsweise der Sperre 24 ist im wesentlichen die gleiche, wie die der Sperre 12.
In Betriebsstellung des Fahrerhauses befindet sich die Kippstütze 3 in der aus Fig. 5 ersichtlichen Stellung. Der Sicherungsriegel 27 und die Riegelfalle 28 nehmen eine etwa parallele Lage zur Lasche 4 ein, wobei der Sicherungsriegel 27 zwischen Gelenkbolzen 26 und dem Lagerschild 2 und die Riegelfalle 28 eine diametral gegenüberliegende Position einnimmt.
Die Riegelfalle 28 hat an ihrem gelenkseitigen Ende einen Mitnehmerbolzen 29, der an der Unterseite 30 des Sicherungsriegels 27 anliegt. An der Oberseite 31 des Sicherungsriegels 27 ist eine Ausnehmung 32 vorgesehen, in der ein an der in Ausknickrichtung der Lasche 4 liegenden Seite 18 ein Anschlag 33 anliegt, und somit die Bewegung des Sicherungsriegels 27 nach oben begrenzt. Die Riegelfalle 28 hat weiterhin an ihrem freien Ende ein Ballastgewicht 34, das zusammen mit dem Mitnehmerbolzen 29 den Sicherungsriegel 27 beim Aufkippen des Fahrerhauses aus der Position gemäß Fig. 5 in die gesicherte Verriegelungsstellung gemäß Fig. 6 mitverschwenkt. Nach dem Hochkippen des Fahrerhauses liegt der Sicherungsriegel 27 mit seiner Anschlagkante 35 an der Stirnseite 18 der Lasche 4 an und blockiert somit die Schwenkbewegung der Lasche 4 gegenüber dem Lagerschild 2. Der Anschlag 33 verhindert eine Bewegung des Riegelgliedes 28 nach oben. Durch Umlegen der Sicherungsfalle 28 aus der gesicherten Position I in die Position II wird der Sicherungsriegel 27 aus seiner gesicherten Stellung in die entsicherte Stellung übergeführt. In der Position II liegt dabei die Riegelfalle 28 an der Seite 18 der Lasche 4 an. Durch geringfügiges weiteres Aufkippen wird die Anlage zwischen der Lasche 4 und dem Riegelglied 27 gelöst, das dann aus der entsicherten Position in die Entriegelungsposition III schwenkt. Danach kann das Fahrerhaus in seine Betriebslage zurückgeschwenkt werden. Dabei wird die Riegelfalle 28 von der Lasche 4 ebenfalls mitverschwenkt, die bei einer bestimmten Winkelstellung der Laschen 4 und 5 in die Sperrstellung umschwenkt und über den Mit-

nehmerbolzen 29 den Sicherungsriegel 27 in die Sperrbereitschaftsstellung mitnimmt.

. |.    P a t e n t a n s p r ü c h e

1. Sicherheitseinrichtung für eine aus zwei mit ihren freien Enden einerseits an einem kippbaren Fahrerhaus, von insbesondere Nutzfahrzeugen und andererseits an dessen Fahrzeugrahmen angelenkten und untereinander über ein Knickgelenk verbundenen Laschen gebildeten Kippstütze, bestehend aus einem in der Nähe eines Gelenkpunktes der Kippstütze am Fahrerhaus, am Fahrgestellrahmen oder einer Lasche angeordneten Sperre, die in gekippter Stellung des Fahrerhauses, in der die Laschen eine annähernd gestreckte und durch einen Anschlag gesicherte Lage einnehmen mit einer Anschlagkante an einer in Einknickrichtung liegenden Stirnseite einer Lasche anliegt, dadurch gekennzeichnet, daß die Sperre (12, 24) als schwenkbarer Sicherungsriegel (14, 27) ausgebildet ist und mit einer Riegelfalle (15, 28) zusammenwirkt, die beim Aufkippen des Fahrerhauses infolge der Relativbewegungen der Laschen (4 und 5) gegenüber dem Fahrerhaus bzw. dem Fahrgestellrahmen aus einer Löse- in eine Sicherungsstellung verstellbar ist und die dabei den Sicherungsriegel (14, 27) gleichzeitig aus einer Entriegelungs- in eine Verriegelungsstellung umschwenkt und das durch Umlegen der Riegelfalle (15, 28) in eine vom Sicherungsriegel (14, 27) losgelöste Lage diese aus einem gesicherten in einen entsicherten Zustand übergeführt wird, aus dem der Sicherungsriegel durch geringfügiges weiteres Aufkippen des Fahrerhauses selb-sttätig in die Entriegelungsstellung schwenkt.

2. Sicherheitseinrichtung nach Anspruch 1, dadurch gekennzeichnet, daß der Sicherungsriegel (27) zusammen mit der Riegelfalle (28) auf einem am Fahrgestellrahmen (Konsole 25) befestigten Gelenkbolzen (26) schwenkbar gelagert ist, wobei in der gesicherten Verriegelungsstellung der Sicherungsriegel (27) mit seiner

0092407

Anschlagkante (35) in unmittelbarer Nähe des fahrgestellseitigen Gelenkpunktes (9) der Lasche (4), an der in Einknickrichtung liegenden Stirnseite (18) anliegt und die Riegelfalle (28) eine dem Sicherungsriegel (14) diametral gegenüberliegende Position einnimmt und über einen an der Unterseite
des Riegelgliedes (27) anliegenden Mitnehmerbolzen (29) diesen in der gesicherten Verriegelungsstellung hält.

3. Sicherheitseinrichtung nach Anspruch 1, dadurch gekennzeichnet, daß durch Schwenken der Riegelfalle (28) in Richtung
der Lasche (4) der Sicherungsriegel (27) aus der gesicherten
Verriegelungs- in eine entsicherte Verriegelungsstellung überführbar ist.

4. Sicherheitseinrichtung nach einem der Ansprüche 1 bis 3,
dadurch gekennzeichnet, daß am freien Ende der Riegelfalle (28)
ein als Bolzen ausgebildetes Balastgewicht (34) angeordnet ist.

5. Sicherheitseinrichtung nach einem der Ansprüche 1 bis 4, dadurch gekennzeichnet, daß in entsicherter Verriegelungsstellung
der Bolzen (34) an der in Einknickrichtung liegenden Stirnseite
(18) der Lasche (4) anliegt.

6. Sicherheitseinrichtung nach einem der Ansprüche 1 bis 5, dadurch gekennzeichnet, daß oberhalb des Riegelgliedes (27) eine
Anschlagnase (33) zur Begrenzung des Sicherungsriegels (27) in
der gesicherten Verriegelungslage vorgesehen ist.

7. Sicherheitseinrichtung nach Anspruch 1, dadurch gekennzeichnet, daß der Sicherungsriegel (14) als U-förmiger Bügel ausgebildet ist und zusammen mit der Riegelfalle (15) gemeinsam auf
einem an der fahrgestellseitigen Lasche (4) in der Nähe des Knickgelenkes (11) angeordneten Bolzen (16) gelagert ist.

8. Sicherungseinrichtung nach Anspruch 1 und 7, dadurch gekennzeichnet, daß der Sicherungsriegel (14) mit seinem Anschlag
(17) vor der in Knickrichtung nach vorne weisenden Stirnseite
(18) der Lasche (4) und der Riegelfalle (15) an der der Knickrichtung abweisenden Seite (20) der Lasche (4) angeordnet ist.

9. Sicherheitseinrichtung nach einem der Ansprüche 1 und 7
bis 8, dadurch gekennzeichnet, daß in entsicherter Lage des
Sicherungsriegels (14) die Riegelfalle (15) nach oben geschwenkt
und dabei das Knickgelenk (11) überbrückend an der oberen Lasche
(5) anliegt.

10. Sicherheitseinrichtung nach einem der Ansprüche 1 und 7 bis
9, dadurch gekennzeichnet, daß die Riegelfalle (15) einen Mitnehmerbolzen bzw. Nase (22) zum Schwenken des Sicherungsriegels
(14) aufweist.

11. Sicherheit-seinrichtung nach einem der Ansprüche 1 und 7 bis
10, dadurch gekennzeichnet, daß bei aufgekipptem Fahrerhaus die
vorgegebene maximale Strecklage der Laschen (4 und 5) durch eine
an der Lasche (5) angeordnete Anschlagnase (13) und durch einen
am gelenkseitigen Ende (6) der fahrgestellfesten Lasche (4) angeordneten Anschlag (Bolzen 16) begrenzt ist.

- - - - - - - - -

1/3

0093407

Fig.3

Fig.4

Fig.2

Fig.1

*Fig. 5*

Fig.6

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DD-A- 143 235 (IFA-AUTOMOBILWERKE) * Figur * | 1,7-9 | B 62 D   33/06 |
| A | DE-A-1 811 189  (MAN) * Figuren 1, 2 * | 1 | |
| A | DE-A-2 633 361 (IFA-AUTOMOBILWERKE) | | |
| D,A | DE-A-2 827 133  (VOLKSWAGENWERK) | | |
| | | | RECHERCHIERTE SACHGEBIETE (Int. Cl. ³) |
| | | | B 62 D   33/00 |

Der vorliegende Recherchenbericht wurde für alle Patentansprüche erstellt.

| Recherchenort BERLIN | Abschlußdatum der Recherche 22-07-1983 | Prüfer LUDWIG H J |
|---|---|---|

EPA Form 1503 03 82